# EUROPEAN PATENT SPECIFICATION

(11) **EP 4 391 491 B1**
(45) Date of publication and mention of the grant of the patent: **25.02.2026**
(21) Application number: 22929630.6
(22) Date of filing: 06.12.2022
(51) Int. Cl.: H04W 4/38, H04W 4/40, H04W 4/029, H04L 67/12, H04L 67/60, H04Q 9/00, H04L 67/06, H04L 67/14, H04W 24/10

(54) **PERCEPTION DATA ACQUISITION METHOD AND APPARATUS, PERCEPTION DATA REPORTING METHOD AND APPARATUS, AND DEVICE, STORAGE MEDIUM AND PROGRAM PRODUCT**
VERFAHREN UND VORRICHTUNG ZUR ERFASSUNG VON WAHRNEHMUNGSDATEN, VERFAHREN UND VORRICHTUNG ZUR MELDUNG VON WAHRNEHMUNGSDATEN SOWIE VORRICHTUNG, SPEICHERMEDIUM UND PROGRAMMPRODUKT
PROCÉDÉ ET APPAREIL D'ACQUISITION DE DONNÉES DE PERCEPTION, PROCÉDÉ ET APPAREIL DE RAPPORT DE DONNÉES DE PERCEPTION, ET DISPOSITIF, SUPPORT D'ENREGISTREMENT ET PRODUIT DE PROGRAMME

(30) Priority: 03.03.2022 CN 202210203727
(43) Date of publication of application: 26.06.2024
(73) Proprietor: Tencent Technology (Shenzhen) Company Limited, Shenzhen, Guangdong, 518057 (CN)
(72) Inventor: ZHANG, Zhuoyun, Shenzhen, Guangdong 518057 (CN)
(74) Representative: Gunzelmann, Rainer
(86) International application number: PCT/CN2022/136797
(87) International publication number: WO 2023/165203

(56) References cited:
- WO-A1-2020/173324
- WO-A1-2021/088905
- WO-A1-2021/155090
- CN-A- 106 507 293
- CN-A- 109 905 415
- CN-A- 112 243 198
- US-A1- 2020 264 628

## Description

### RELATED APPLICATION

This application claims priority to Chinese Patent Application No. 202210203727.4 filed on March 3, 2022.

### FIELD OF THE TECHNOLOGY

This application relates to the field of communications technologies, and more specifically, to a method and an apparatus for obtaining sensing data, a method and an apparatus for reporting sensing data, a device, a storage medium, and a program product.

### BACKGROUND OF THE DISCLOSURE

With the development of terminal technologies, a terminal device may communicate with a network based on conventional communications technologies, and may sense information about the terminal device and a surrounding environment. However, in the related art, for schemes of reporting sensing data of a terminal, an application layer reporting scheme is usually used. That is, sensing data is directly transparently transmitted to a service server. As a result, a mobile network cannot collaboratively process and utilize sensing data.

Related technology is discussed in US 2020/264628A1, WO 2021/155090A1, and CN 109905415A.

### SUMMARY

The present invention is defined in the claims. Embodiments of this application provide a method and an apparatus for obtaining sensing data, a method and an apparatus for reporting sensing data, a device, a storage medium, and a program product. In this way, a mobile network can obtain sensing data, to facilitate collaborative processing and utilization of sensing data by the mobile network.

In the embodiments of this application, sensing data request information is sent to a terminal device, where the sensing data request information includes sensing data reporting information, and the sensing data request information is used for indicating the terminal device to report sensing data according to the sensing data reporting information. Then feedback information returned by the terminal device is obtained, where the feedback information is sent by the terminal device according to the sensing data reporting information. Next, sensing data is obtained according to the feedback information. In this way, a mobile network can be enabled to sense related data of the terminal device, so that the mobile network is enabled to collaborate with a service server to process and utilize sensing data. Compared with schemes of processing data purely based on a service server in the related art, processing pressure on a back-end service server is reduced, so that efficiency of processing data is improved.

### BRIEF DESCRIPTION OF THE DRAWINGS

FIG. 1 is a schematic structural diagram of a system for obtaining sensing data according to an embodiment of this application.
FIG. 2 is a schematic flowchart of a method for obtaining sensing data according to an embodiment of this application.
FIG. 3 is a schematic diagram of an application scenario of a method for obtaining sensing data according to an embodiment of this application not covered by the claimed invention.
FIG. 4 is a schematic flowchart of a method for reporting sensing data according to an embodiment of this application.
FIG. 5 is a schematic block diagram of an apparatus for obtaining sensing data according to an embodiment of this application not covered by the claimed invention.
FIG. 6 is a schematic block diagram of an apparatus for reporting sensing data according to an embodiment of this application not covered by the claimed invention.
FIG. 7 is a schematic block diagram of a network device according to an embodiment of this application.

### DESCRIPTION OF EMBODIMENTS

Technical solutions in embodiments of this application are described below with reference to the accompanying drawings in the embodiments of this application.

The embodiments of this application provide a method and an apparatus for obtaining sensing data and a method and an apparatus for reporting sensing data. The embodiments of this application may be applied to various scenarios such as 5G, cloud technology, and smart transportation.

First, some nouns or terms that appear during descriptions of the embodiments of this application are explained as follows:

5^{th} generation mobile communication technology (5G) is a new generation broadband mobile communication technology with characteristics of a high speed, low latency, and massive connections, and is a network infrastructure that implements the interconnection of man-machine-things.

An objective of the 3rd generation partnership project (3GPP) is to implement a smooth transition from 2G networks to 3G networks, to ensure backward compatibility of future technologies, and support easy network construction and roaming and compatibility between systems.

A user equipment (UE) route selection policy (URSP) rule is defined in the 3GPP 5G protocol. The URSP rule includes two sets of important parameters. One set is a traffic descriptor parameter, including a data network name (DNN), an IP 3-tuple (IP descriptor), a domain descriptor, connection capabilities, and other parameters. The other set is a route selection descriptor, including single network slice selection assistance information (S-NSSAI), a session and service continuity (SSC) mode, a DNN, and other parameters. The URSP rule is a correspondence between multiple sets of traffic descriptors and route selection descriptors.

A policy control function (PCF) is a 5G core network element and provides functions such as access selection for user terminals that the PCF is responsible for and PDU session related policies.

A protocol data unit (PDU) session is a data plane channel for communication between UE and a data network (DN). After the PDU session is established, a data transmission channel between the UE and the DN is established.

A user plane function (UPF) is a user plane functional entity, and has a main function of being responsible for routing and forwarding of data packets and QoS flow mapping.

An access and mobility management function (AMF) is an access and mobility management functional entity.

A session management function (SMF) is a session management functional entity.

A unified data manager (UDM) is responsible for generating authentication vectors and is used as a front end for user data and authentication data.

Encapsulation: To implement transmission through a network, data needs to be transmitted layer by layer from an upper layer. If a host wants to transmit data to another host, the data needs to be first packaged into a data packet of a special protocol at a sending end, and header information is added layer by layer. This process is called encapsulation.

Decapsulation: When the data is transmitted to a receiving device, the receiving device needs to delete added information, and decides, according to a header, to transfer the data up along a protocol stack to an appropriate application. This process is called decapsulation.

Smart transportation makes full use of new generation information technologies such as internet of things, space sensing, cloud computing, and mobile internet in the entire transportation field, and comprehensively uses theories and tools such as transportation science, systematic methods, artificial intelligence, and knowledge mining. With the objectives of comprehensive sensing, deep integration, active service, and scientific decision-making, smart transportation builds a real-time dynamic information service system, deeply mines transportation-related data, forms a problem analysis model, and implements improvement of industry resource allocation optimization capability, public decision-making capability, industry management capability, and public service capability, thereby promoting safer, more efficient, more convenient, more economical, more environmentally friendly, and more comfortable operation and development of transportation, and driving transformation and upgrading of transportation-related industries.

The cloud technology is a hosting technology that unifies a series of resources such as hardware, software, and networks in a wide area network or a local area network to implement computing, storage, processing, and sharing of data. The cloud technology is a collective name of a network technology, an information technology, an integration technology, a management platform technology, an application technology, and the like based on an application of a cloud computing business mode, and may form a resource pool, which is used as required, and is flexible and convenient. The cloud computing technology becomes an important support. A background service of a technical network system requires a large amount of computing and storage resources, such as video websites, image websites, and more portal websites. As the Internet industry is highly developed and applied, each article may have its own identifier in the future and needs to be transmitted to a background system for logical processing. Data at different levels is separately processed, and data in various industries requires strong system support, which can only be implemented through cloud computing.

A blockchain system may be a distributed system formed by connecting clients and a plurality of nodes (computing devices in any form, for example, a server and a user terminal, connected to a network) through network communication. A peer to peer (P2P) network is formed between the nodes. A P2P protocol is an application layer protocol that runs on top of a transmission control protocol (TCP). In a distributed system, any machine such as a server or a terminal may join to become a node. The node includes a hardware layer, a middle layer, an operating system layer, and an application layer.

The embodiments of this application may be implemented in combination with the cloud technology or the blockchain technology. In the method for obtaining sensing data disclosed in the embodiments of this application, such data may be stored on a blockchain.

For example, sensing capability indication information, sensing data request information, feedback information, a first data packet, a second data packet, and an encrypted data packet may all be stored on the blockchain. To facilitate storage and query of the sensing capability indication information, the sensing data request information, the feedback information, the first data packet, the second data packet, and the encrypted data packet, in some embodiments not covered by the claimed invention, the method for obtaining sensing data further includes: sending the sensing capability indication information, the sensing data request information, the feedback information, the first data packet, the second data packet, and the encrypted data packet to a blockchain network, so that nodes of the blockchain network fill the sensing capability indication information, the sensing data request information, the feedback information, the first data packet, the second data packet, and the encrypted data packet into a new block, and add the new block to an end of the blockchain when reaching a consensus on the new block. In the embodiments of this application not covered by the claimed invention, the sensing capability indication information, the sensing data request information, the feedback information, the first data packet, the second data packet, and the encrypted data packet may be stored on a chain to implement backup of records.

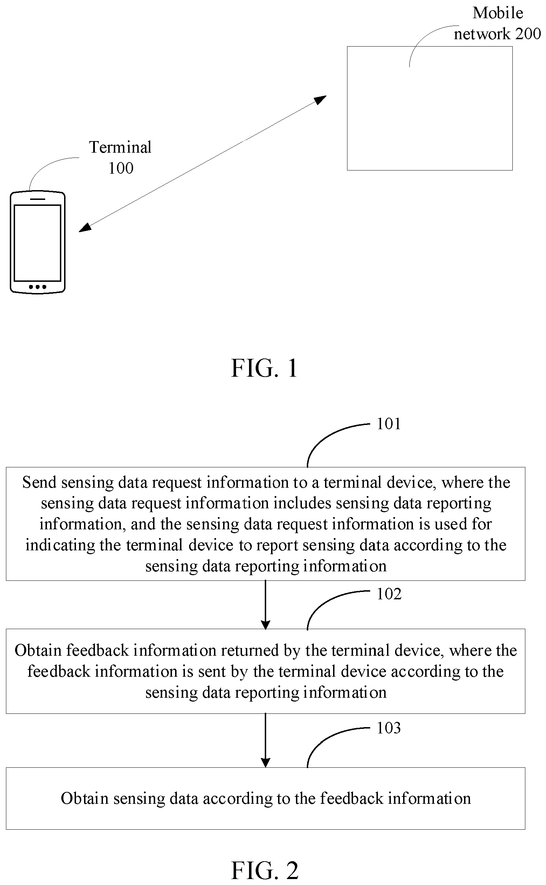

FIG. 1 is a schematic structural diagram of a system for obtaining sensing data according to an embodiment of this application. The system for obtaining sensing data includes a terminal 100 and a mobile network 200.

The terminal 100 may also be referred to as UE, an access terminal, a user unit, a user station, a mobile station, a mobile platform, a remote station, a remote terminal, a mobile device, a user terminal, a terminal, a wireless communication device, a user agent, a user apparatus, or the like. The terminal is a device such as a smartphone, a tablet personal computer, a laptop computer, a personal digital assistant (PDA), a mobile internet device (MID), a wearable device, or an in-vehicle device. The mobile network 200 may include a core network (CN) and a radio access network (RAN). The mobile network 200 may include a functional network element configured to obtain sensing data. According to the embodiments of this application not covered by the claimed invention, the CN may include a CN device, a CN network function, a CN network element, for example, a mobility management entity (MME), an AMF, an SMF, a UPF, and a PCF. Different generations of mobile communication CNs include different network elements or network functions.

According to the embodiments of this application not covered by the claimed invention, the RAN may include a RAN device, a RAN node, a non-3GPP RAN, a central unit (CU), a distributed unit (DU), a base station, an evolved Node B (eNB), a 5G Node B (gNB), a radio network controller (RNC), a NodeB, a non-3GPP interworking function (N3IWF), an access controller (AC) node, an access point (AP) device, or a wireless local area network (WLAN) node.

According to the embodiments of this application, when obtaining sensing data, the terminal 100 may be specifically configured to: obtain sensing data request information sent by a network device, where the sensing data request information includes sensing data reporting information; determine target sensing data according to the sensing data reporting information, and generate feedback information according to the target sensing data, where the target sensing data is sensing data corresponding to the sensing data reporting information; and return the feedback information to the network device.

According to the embodiments of this application, when obtaining sensing data, the mobile network 200 may be specifically configured to: send sensing data request information to a terminal device, where the sensing data request information includes sensing data reporting information, and the sensing data request information is used for indicating the terminal device to report sensing data according to the sensing data reporting information; obtain feedback information returned by the terminal device, where the feedback information is information obtained by the terminal device by performing information feedback according to the sensing data reporting information; and obtain sensing data according to the feedback information.

Detailed descriptions are separately provided below. A description order of the following embodiments is not construed as a limitation on a preferred order of the embodiments.

FIG. 2 is a schematic flowchart of a method for obtaining sensing data according to an embodiment of this application. For example, the method may be applied to a network device such as a base station or a network element. The method mainly includes step 101 to step 103, described as follows:

Step 101: Send sensing data request information to a terminal device, where the sensing data request information includes sensing data reporting information, and the sensing data request information is used for indicating the terminal device to report sensing data according to the sensing data reporting information.

The sensing data request information is used for requesting the terminal device to report sensing data. The sensing data request information includes the sensing data reporting information. The sensing data reporting information may be at least one of the following information: a sensing data type, reporting frequency of sensing data, a maximum reporting quantity, a reporting start time, a reporting end time, a reporting start condition, and a reporting end condition. The sensing data request information is used for indicating the terminal device to report sensing data according to the sensing data reporting information. For example, in a case that the sensing data reporting information includes the sensing data type and the reporting frequency of sensing data, the terminal device may acquire corresponding sensing data according to the sensing data type, and then may report the sensing data to the network device according to the reporting frequency of sensing data.

For example, the reporting start condition may be at least one of the following: the terminal device performs reporting when a speed is greater than 50 km/h; the terminal device starts to report data when humidity, a temperature, and a wind speed are greater than critical values; and the terminal device starts to report data when environmental event information is detected. For example, the reporting frequency may be once an hour, that is, the terminal device reports sensing data to a mobile network once an hour according to the reporting frequency.

For example, a specific control plane network element for collecting sensing data may be deployed in the mobile network to collect information about sensing data. According to the embodiments of this application, a service control function (SCF) is used to refer to the control plane network element, that is, the network device, that supports obtaining of sensing data.

For example, the method may further include: obtaining sensing capability indication information sent by the terminal device, where the sensing capability indication information is used for indicating whether the terminal device supports reporting of sensing data; and generating the sensing data request information and sending the sensing data request information to the terminal device if the sensing capability indication information indicates that the terminal device supports reporting of sensing data.

It can be understood that the terminal device may determine, according to sensing capability of the terminal device, whether to support reporting of sensing data. For example, if a sensing apparatus capable of acquiring sensing data is installed on the terminal device, it is determined that reporting of sensing data is supported. If a sensing apparatus capable of acquiring sensing data is not installed on the terminal device, it is determined that reporting of sensing data is not supported. Then, the sensing capability indication information is generated according to whether reporting of sensing data is supported, and the sensing capability indication information is sent to the network device.

For example, it is defined that sensing capability identification information indicates whether the terminal device supports reporting of sensing data. For example, the sensing capability identification information may indicate "support" or "not support". If the sensing capability identification information received by the mobile network indicates "support", it is considered that the corresponding terminal device supports reporting of sensing data. If the sensing capability identification information received by the mobile network indicates "not support", it is considered that the corresponding terminal device does not support reporting of sensing data. In another example, identification information indicating that reporting of sensing data is supported may be defined. If the mobile network receives the identification information, it indicates that the corresponding terminal device supports reporting of sensing data, or otherwise, it indicates that the corresponding terminal device does not support reporting of sensing data.

For example, the sensing capability indication information sent by the terminal device may be used for indicating a specific sensing data type that supports reporting, and the network device generates sensing data request information according to the sensing capability indication information. For example, the sensing data request information includes the sensing data reporting information, where the sensing data reporting information includes a specific sensing data type that supports reporting and that is indicated by the sensing capability indication information.

For example, in a case that the sensing capability indication information sent by the terminal device indicates that reporting of location information is supported, the sensing data request information may be used for requesting the terminal device to report location information.

For ease of understanding, the embodiments of this application use a 5G network architecture as an example to describe the method for obtaining sensing data according to the embodiments of this application. In a process of subsequent network evolution, communication networks such as a 6G network and a 7G network may also use the method for obtaining sensing data according to the embodiments of this application.

For example, the "sending sensing data request information to a terminal device" may mainly include: encapsulating the sensing data request information into a first data packet, where the sensing data reporting information includes at least one of the sensing data type, the reporting frequency of sensing data, the maximum reporting quantity of sensing data, the reporting start time of sensing data, the reporting end time of sensing data, and a reporting start and end condition of sensing data; and sending the first data packet to the terminal device.

The "sending the first data packet to the terminal device" may specifically include: encrypting the first data packet, and sending the first data packet to the terminal device.

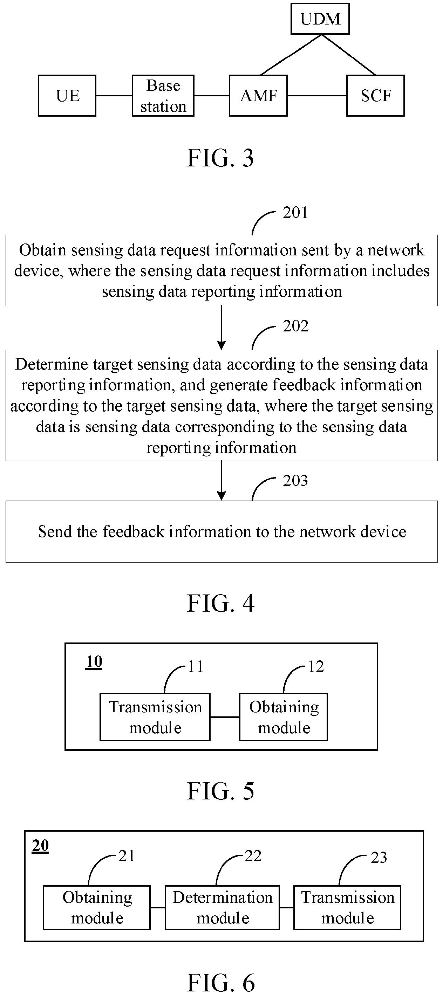

For example, the sensing data request information may be encapsulated in a specific data packet, for example, a sensing request container. Another network functional unit and a base station of the mobile network transparently transmit the data packet. For example, as shown in FIG. 3, the SCF may send the data packet to an AMF serving the UE, the AMF then sends the data packet to a base station serving the UE, and finally the base station sends the data packet to the UE. A transmission path is a possible implementation. Alternatively, the SCF may send the data packet to an SMF serving the UE first, the SMF sends the data packet to the AMF, then the AMF sends the data packet to a base station, and finally the base station sends the data packet to the UE. A specific transmission path is not limited in the embodiments of this application.

Step 102: Obtain feedback information returned by the terminal device, where the feedback information is sent by the terminal device according to the sensing data reporting information.

The feedback information includes the sensing data or the sensing capability indication information. For example, the terminal device receives the sensing data request information sent by the network device, and the terminal device supports reporting of sensing data. The terminal device determines, according to the sensing data reporting information, target sensing data to be reported, performs operations such as encapsulation or encryption on the target sensing data to be reported, generates feedback information, and returns the feedback information to the network device. In another example, the terminal device receives the sensing data request information sent by the network device, and the terminal device does not support reporting of sensing data. The terminal device may generate sensing capability indication information, perform operations such as encapsulation or encryption on the sensing capability indication information, generate feedback information, and return the feedback information to the network device.

Step 103: Obtain sensing data according to the feedback information.

The sensing data may include at least one of the following of the terminal device: location information, speed information, acceleration information, temperature information, humidity information, wind speed information, surrounding event information, and the like.

In some embodiments, 102 may mainly include: obtaining an encrypted data packet returned by the terminal device. Step 103 may include: decrypting the encrypted data packet to obtain a second data packet; decapsulating the second data packet; and obtaining the sensing data according to the decapsulated second data packet.

A type of the second data packet may be consistent with a type of the first data packet or may be inconsistent with the type of the first data packet. To avoid a problem of data leakage caused by malicious interception of sensing data, when transmitting a data packet, the terminal device may encrypt the data packet and transmit the encrypted data packet to the control plane network element.

For example, when obtaining the first data packet, the terminal device determines whether reporting of data of the sensing data type that the sensing data request information requests to report is supported, encapsulates sensing data of a supported type in the second data packet, and leaves sensing data of an unsupported type empty, or encapsulates the second data packet with a value that has no specific meaning. The type of the second data packet may be consistent with the type of the first data packet, for example, is a sensing request container. Then, the terminal device sends the data packet to the base station, and finally the data packet is sent to the SCF through an original path.

In some embodiments, if the sensing data reporting information includes the reporting frequency of sensing data, after sensing data is obtained according to the feedback information for the first time, it is detected, according to a time at which the terminal device first returns the feedback information, whether the terminal device returns the feedback information according to the reporting frequency of sensing data. The sensing data request information is resent to the terminal device if it is detected that the terminal device does not return the feedback information according to the reporting frequency of sensing data.

The reporting frequency of sensing data may be determined according to a type of the terminal device or a type of sensing data, so that the mobile network better grasps a status of sensing data, and better collaboratively processes and utilizes sensing data. Therefore, if the sensing data reporting information includes the reporting frequency of sensing data, in a case that the terminal device does not return sensing data according to the reporting frequency of sensing data, the sensing data request information may be resent to the terminal device to obtain sensing data.

A service server is a server that receives sensing data in a specific service scenario and that executes corresponding service logic (depending on requirements of a specific application scenario, for example, an operation mode of an air conditioner in an environment in which the terminal device is located is controlled according to temperature and humidity data reported by the terminal device, or various nearby services are recommended according to a location reported by the terminal device). The mobile network collaborates with the service server to process sensing data in various manners. Details are described separately below.

In some embodiments not covered by the claimed invention, the mobile network may perform some steps of service processing logic on sensing data. For example, the mobile network may perform preprocessing steps on data, including filtering out incomplete data, data whose value is within a specified inappropriate range, and the like, to help reduce processing pressure of the service server and improve efficiency of processing sensing data.

In another embodiment not covered by the claimed invention, the mobile network may execute service processing logic on some sensing data (sensing data of various specific types, for example, a specific location, a specific speed, specific acceleration, a specific temperature, specific humidity, and a specific wind speed) reported by the terminal device, and send a processing result to the service server, to reduce processing pressure of the service server.

For example, in a high-load state of the service server (for example, a quantity of concurrent requests of the service server causes CPU usage exceeding a first threshold value, for example, 90%), the mobile network may execute service processing logic on some sensing data reported by the terminal device (sensing data of specific types, for example, a speed, or a temperature), and send a processing result to the service server, to reduce processing pressure of the service server. In a low-load state of the service server (for example, a quantity of concurrent requests of the service server causes CPU usage less than a second threshold value, for example, 30%), the mobile network may execute service processing logic on some sensing data reported by the terminal device (sensing data of specific types, for example, a speed, or a temperature), to make full use of computing resources of the service server.

In some embodiments, the sensing data reporting information may include the sensing data type. The sensing data type includes at least one of location information, speed information, acceleration information, temperature information, humidity information, wind speed information, and surrounding event information of the terminal device. Step 103 may specifically include: obtaining sensing data of the sensing data type according to the feedback information returned by the terminal device, where the sensing data includes at least one of the location information, the speed information, the acceleration information, the temperature information, the humidity information, the wind speed information, and the surrounding event information.

The sensing data type in the sensing data reporting information may be determined according to a type of the terminal device. For example, if the terminal device is an in-vehicle terminal, for example, the terminal may be a trip computer with a wireless communication function, or wireless UE externally connected to a trip computer, the sensing data type in the sensing data reporting information may be determined as event information.

The "event information" is surrounding event information detected by the terminal device. A sensing device of the in-vehicle terminal may sense road event information, for example, road congestion, road accidents, and wrong-way driving on roads. In this case, the road event information is reported to the mobile network for the mobile network to obtain sensing data, to facilitate collaborative processing and utilization of sensing data by the mobile network.

In an example, the terminal device may be a wearable device. The wearable device may also be called a wearable smart device, which is a general term for wearable devices developed by applying wearable technology to intelligent design of daily wear such as glasses, gloves, watches, clothing and shoes. Alternatively, the terminal device may be a device of an unmanned aerial vehicle. Alternatively, the terminal device may be a roadside device, for example, may be a streetlamp, a signal lamp, or another roadside device with a wireless communication function.

In some embodiments not covered by the claimed invention, after "sending sensing data request information to a terminal device", the method may further include: obtaining response information returned by the terminal device.

For example, the terminal device determines, according to the sensing data request information, whether to report such sensing data. If reporting is supported, the terminal device returns response information of an accept request to the SCF. If reporting is not approved, the terminal device returns response information of a reject request to the SCF. If receiving the accept request from the terminal device, the SCF may monitor a reporting status of sensing data by the terminal device according to the reporting frequency carried in sensing data request information. If receiving the reject request from the terminal device, the SCF does not need to allocate a processor resource to the terminal device to monitor a reporting status of sensing data, and the like, thereby saving the processor resource.

According to the embodiments of this application, the sensing data reporting information includes the reporting frequency of sensing data and the maximum reporting quantity. The method further includes: sending the reporting frequency and the maximum reporting quantity of sensing data to a base station serving the terminal device, so that the base station allocates and schedules resources according to the reporting frequency and the maximum reporting quantity of sensing data.

The base station may be a base transceiver station (BTS) in a GSM or CDMA, or may be a NodeB in WCDMA, or may be an evolved NodeB (eNB or e-NodeB) in LTE or a 5G gNB. This is not limited in the embodiments of this application.

All the foregoing technical solutions may be combined in any way to form different implementations of the embodiments of this application, and details are not described herein again.

According to the embodiments of this application, sensing data request information is sent to a terminal device, where the sensing data request information includes sensing data reporting information, and the sensing data request information is used for indicating the terminal device to report sensing data according to the sensing data reporting information. Then feedback information returned by the terminal device is obtained, where the feedback information is sent by the terminal device according to the sensing data reporting information. Then sensing data is obtained according to the feedback information. In this way, a mobile network can obtain sensing data, to facilitate collaborative processing and utilization of sensing data by the mobile network.

FIG. 4 is a schematic flowchart of a method for reporting sensing data according to an embodiment of this application. For example, the method may be applied to a terminal device. The terminal device may be an electronic device with a communication function, for example, a smartphone, a wearable smart device, or an in-vehicle terminal. The method mainly includes step 201 to step 203, described as follows:

Step 201: Obtain sensing data request information sent by a network device, where the sensing data request information includes sensing data reporting information.

For example, the sensing data request information is used by the network device to request the terminal device to report sensing data, and the sensing data reporting information may be at least one of the following information: a sensing data type, reporting frequency of sensing data, a maximum reporting quantity, a reporting start time, a reporting end time, a reporting start condition, and a reporting end condition. The sensing data request information is used for indicating the terminal device to report sensing data according to the sensing data reporting information. For example, in a case that the sensing data reporting information includes the sensing data type and the reporting frequency of sensing data, the terminal device may acquire corresponding sensing data according to the sensing data type, and then may report the sensing data to the network device according to the reporting frequency of sensing data.

In some embodiments not covered by the claimed invention, after step 201, the method may further include: sending response information to the network device.

For example, the terminal device determines, according to the sensing data request information, whether to report sensing data. If reporting is supported, the terminal device returns response information of an accept request to the network device. If reporting is not approved, the terminal device returns response information of a reject request to the network device. In this way, it is easy for the network device to allocate a processor resource. For example, if receiving the accept request from the terminal device, the network device may monitor a reporting status of sensing data by the terminal device according to the reporting frequency carried in sensing data request information. If receiving the reject request from the terminal device, the network device does not need to allocate a processor resource to the terminal device to monitor a reporting status of sensing data, and the like, thereby saving the processor resource.

Step 202: Determine target sensing data according to the sensing data reporting information, and generate feedback information according to the target sensing data, where the target sensing data is sensing data corresponding to the sensing data reporting information.

In some embodiments, the sensing data reporting information may include the sensing data type. Step 202 may mainly include: determining sensing data of the sensing data type as the target sensing data, where the target sensing data includes at least one of location data, speed data, acceleration data, temperature data, humidity data, wind speed data, and surrounding event data of the terminal device.

The sensing data type may include at least one of location information, speed information, acceleration information, temperature information, humidity information, wind speed information, and surrounding event information of the terminal device. The sensing data type in the sensing data reporting information may be determined according to a type of the terminal device. For example, if the terminal device is an in-vehicle terminal, for example, the terminal may be a trip computer with a wireless communication function, or wireless UE externally connected to a trip computer, the sensing data type in the sensing data reporting information may be determined as event information.

The "event information" is information related to a surrounding event detected by the terminal device. A sensing device of the in-vehicle terminal may sense road event information, for example, road congestion, road accidents, and wrong-way driving on roads. In this case, the road event information is reported to the mobile network for the mobile network to obtain sensing data, to facilitate collaborative processing and utilization of sensing data by the mobile network.

As an example rather than a limitation, the terminal device may be a wearable device. The wearable device may also be called a wearable smart device, which is a general term for wearable devices developed by applying wearable technology to intelligent design of daily wear such as glasses, gloves, watches, clothing and shoes. Alternatively, the terminal device may be a device of an unmanned aerial vehicle. Alternatively, the terminal device may be a roadside device, for example, may be a streetlamp, a signal lamp, or another roadside device with a wireless communication function.

Step 203: Send the feedback information to the network device.

In some embodiments, the method may further include: determining sensing capability indication information according to sensing capability of the terminal device, where the sensing capability indication information is used for indicating whether the terminal device supports reporting of sensing data; and sending the sensing capability indication information to the network device.

The terminal device may determine, according to sensing capability of the terminal device, whether to support reporting of sensing data. For example, if a sensing apparatus capable of acquiring sensing data is installed on the terminal device, it is determined that reporting of sensing data is supported. If a sensing apparatus capable of acquiring sensing data is not installed on the terminal device, it is determined that reporting of sensing data is not supported.

For example, it is defined that sensing capability identification information indicates whether the terminal device supports reporting of sensing data. For example, the sensing capability identification information may indicate "support" or "not support". If the sensing capability identification information received by the mobile network indicates "support", it is considered that the corresponding terminal device supports reporting of sensing data. If the sensing capability identification information received by the mobile network indicates "not support", it is considered that the corresponding terminal device does not support reporting of sensing data. In another example, identification information indicating that reporting of sensing data is supported may be defined. If the mobile network receives the identification information, it indicates that the corresponding terminal device supports reporting of sensing data, or otherwise, it indicates that the corresponding terminal device does not support reporting of sensing data.

For example, the sensing capability indication information sent by the terminal device may be used for indicating a specific sensing data type that supports reporting, and the network device may generate sensing data request information according to the sensing capability indication information. For example, the sensing data request information may include the sensing data reporting information, where the sensing data reporting information includes a specific sensing data type that supports reporting and that is indicated by the sensing capability indication information.

For example, in a case that the sensing capability indication information sent by the terminal device indicates that reporting of location information is supported, the sensing data request information may be used for requesting the terminal device to report location information.

For example, the "sending the sensing capability indication information to the network device" may specifically include: sending the sensing capability indication information to the network device in a network registration procedure of the terminal device; or sending the sensing capability indication information to the network device in a location update procedure of the terminal device; or sending the sensing capability indication information to the network device in a session management procedure of the terminal device.

For example, in a mobile network registration procedure, the terminal device may send the sensing capability indication information to a network device in the mobile network. Alternatively, the sensing capability indication information may be sent to a network device in the mobile network in a location update procedure or in a session management procedure. A network device in the mobile network may determine, according to the sensing capability indication information, whether to send the sensing data request information to the terminal device. In this way, it is not necessary to obtain an additional network resource or send the sensing capability indication information to the mobile network, thereby saving a network resource.

All the foregoing technical solutions may be combined in any way to form an implementation of this application. Details are not described herein again.

According to the embodiments of this application, sensing data request information sent by a network device is obtained, where the sensing data request information includes sensing data reporting information. Then, target sensing data is determined according to the sensing data reporting information, and feedback information is generated according to the target sensing data, where the target sensing data is sensing data corresponding to the sensing data reporting information. Then, the feedback information is sent to the network device, so that the network device obtains sensing data according to the feedback information. In this way, a mobile network obtains sensing data, to facilitate collaborative processing and utilization of sensing data by the mobile network.

The method embodiments of this application are described in detail above, and apparatus embodiments of this application are described in detail below with reference to FIG. 4. It is to be understood that the apparatus embodiments correspond to the method embodiments, and refer to the method embodiments similar descriptions.

FIG. 5 is a schematic structural diagram of an apparatus 10 for obtaining sensing data according to an embodiment of this application not covered by the claimed invention. As shown in FIG. 5, the apparatus 10 for obtaining sensing data may include:
a transmission module 11, configured to send sensing data request information to a terminal device, where the sensing data request information includes sensing data reporting information, and the sensing data request information is used for indicating the terminal device to report sensing data according to the sensing data reporting information;
an obtaining module 12, configured to: obtain feedback information returned by the terminal device, the feedback information being sent by the terminal device according to the sensing data reporting information; and obtain sensing data according to the feedback information.

In some embodiments not covered by the claimed invention, the transmission module 11 may be configured to: encapsulate the sensing data request information into a first data packet, where the sensing data reporting information includes at least one of a sensing data type, reporting frequency of sensing data, a maximum reporting quantity of sensing data, a reporting start time of sensing data, a reporting end time of sensing data, and a reporting start and end condition of sensing data; and send the first data packet to the terminal device.

In some embodiments not covered by the claimed invention, the transmission module 11 may be configured to: encrypt the first data packet, and send the first data packet to the terminal device.

In some embodiments not covered by the claimed invention, the obtaining module 12 may be configured to: obtain an encrypted data packet returned by the terminal device; decrypt the encrypted data packet to obtain a second data packet; decapsulate the second data packet; and obtain the sensing data according to the decapsulated second data packet.

In some embodiments, the sensing data reporting information includes the reporting frequency of sensing data and the maximum reporting quantity of sensing data. The transmission module 11 is further configured to send the reporting frequency of sensing data and the maximum reporting quantity of sensing data to a base station serving the terminal device, so that the base station allocates and schedules resources according to the reporting frequency of sensing data and the maximum reporting quantity of sensing data.

In some embodiments not covered by the claimed invention, the sensing data request information includes the reporting frequency of sensing data, the apparatus 10 for obtaining sensing data may further include a detection module, which may be configured to: after sensing data is obtained according to the feedback information for the first time, detect, according to a time at which the terminal device first returns the feedback information, whether the terminal device returns the feedback information according to the reporting frequency of sensing data; and resend the sensing data request information to the terminal device if it is detected that the terminal device does not return the feedback information according to the reporting frequency of sensing data.

In some embodiments, the sensing data reporting information may include the sensing data type, and the sensing data type includes at least one of location information, speed information, acceleration information, temperature information, humidity information, wind speed information, and surrounding event information of the terminal device. The obtaining module 12 may be configured to obtain sensing data of the sensing data type according to the feedback information returned by the terminal device, where the sensing data includes at least one of the location information, the speed information, the acceleration information, the temperature information, the humidity information, the wind speed information, and the surrounding event information of the terminal device.

In some embodiments not covered by the claimed invention, the obtaining module 12 may further be configured to: obtain sensing capability indication information sent by the terminal device, where the sensing capability indication information is used for indicating whether the terminal device supports reporting of sensing data; and generate the sensing data request information and send the sensing data request information to the terminal device if the sensing capability indication information indicates that the terminal device supports reporting of sensing data.

For the functions of each module in the apparatus 10 for obtaining sensing data in the embodiments of this application not covered by the claimed invention, refer to the specific implementations in the foregoing method embodiments. Details are not described herein again.

The modules in the foregoing apparatus 10 for obtaining sensing data may be implemented entirely or partially by software, hardware, or a combination thereof. The foregoing modules may be built in or independent of a processor of a network device in a hardware form, or may be stored in a memory of the network device in a software form, so that the processor invokes and performs an operation corresponding to each of the foregoing modules.

For the apparatus 10 for obtaining sensing data provided in the embodiments of this application not covered by the claimed invention, the transmission module 11 sends the sensing data request information to the terminal device, where the sensing data request information includes sensing data reporting information, and the sensing data request information is used for indicating the terminal device to report sensing data according to the sensing data reporting information. Next, the obtaining module 12 obtains the feedback information returned by the terminal device, where the feedback information is sent by the terminal device according to the sensing data reporting information. Sensing data is obtained according to the feedback information. In this way, a mobile network can obtain sensing data, to facilitate collaborative processing and utilization of sensing data by the mobile network.

FIG. 6 is a schematic structural diagram of an apparatus 20 for reporting sensing data according to an embodiment of this application not covered by the claimed invention. As shown in FIG. 6, the apparatus 20 for reporting sensing data may include:
an obtaining module 21, configured to obtain sensing data request information sent by a network device, where the sensing data request information includes sensing data reporting information;
a determination module 22, configured to: determine target sensing data according to the sensing data reporting information, and generate feedback information according to the target sensing data, where the target sensing data is sensing data corresponding to the sensing data reporting information; and
a transmission module 23, configured to send the feedback information to the network device.

In some embodiments, the sensing data reporting information may include a sensing data type. The determination module 22 may be configured to: determine sensing data of the sensing data type as the target sensing data, where the target sensing data includes at least one of location data, speed data, acceleration data, temperature data, humidity data, wind speed data, and surrounding event data of the terminal device.

In some embodiments not covered by the claimed invention, the transmission module 23 is further configured to: determine sensing capability indication information according to sensing capability of the terminal device, where the sensing capability indication information is used for indicating whether the terminal device supports reporting of sensing data; and send the sensing capability indication information to the network device.

In some embodiments not covered by the claimed invention, the transmission module 23 may further be configured to: send the sensing capability indication information to the network device in a network registration procedure of the terminal device; or send the sensing capability indication information to the network device in a location update procedure of the terminal device; or send the sensing capability indication information to the network device in a session management procedure of the terminal device.

For the apparatus 20 for reporting sensing data provided in the embodiments of this application not covered by the claimed invention, the obtaining module 21 obtains the sensing data request information sent by the network device, where the sensing data request information includes the sensing data reporting information. Next, the determination module 22 determines target sensing data according to the sensing data reporting information, and generates feedback information according to the target sensing data, where the target sensing data is sensing data corresponding to the sensing data reporting information. Then the transmission module 23 sends the feedback information to the network device, so that the network device obtains sensing data according to the feedback information. In this way, a mobile network obtains sensing data, to facilitate collaborative processing and utilization of sensing data by the mobile network.

The embodiments of this application further provide a computer device, including a processor and a memory. The memory stores a computer program. The processor implements, when executing the computer program, the steps of the foregoing methods in the embodiments of this application.

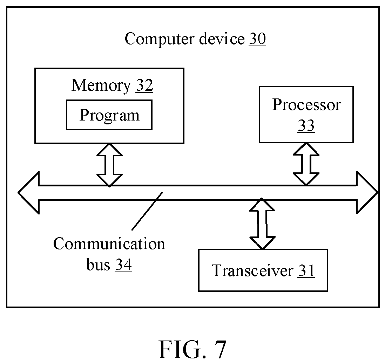

FIG. 7 is a schematic structural diagram of a computer device according to an embodiment of this application. The computer device may be a network device in the mobile network shown in FIG. 1 (for example, a base station, or a network element), or may be the terminal shown in FIG. 1. As shown in FIG. 5, a computer device 30 may include a transceiver 31, a memory 32, a processor 33, and a communication bus 34. The transceiver 31, the memory 32, and the processor 33 communicate with each other through the communication bus 34. The processor 33 may control the transceiver 31 to communicate with another device, for example, may send information or data to another device, or receive information or data sent by another device. The transceiver 31 may include a transmitter and a receiver. The transceiver 31 may further include an antenna, and there may be one or more antennas. The memory 32 may be configured to store a software program and a module. The processor 33 executes the software program and the module stored in the memory 32, for example, a software program for corresponding operations in the foregoing method embodiments.

In some embodiments, the processor 33 may invoke the software program and the module stored in the memory 32 to perform the following operations: sending sensing data request information to a terminal device, where the sensing data request information includes sensing data reporting information, and the sensing data request information is used for indicating the terminal device to report sensing data according to the sensing data reporting information; obtaining feedback information returned by the terminal device, where the feedback information is sent by the terminal device according to the sensing data reporting information; and obtaining sensing data according to the feedback information.

In some embodiments, the processor 33 may invoke the software program and the module stored in the memory 32 to perform the following operations: obtaining sensing data request information sent by a network device, where the sensing data request information includes sensing data reporting information; determining target sensing data according to the sensing data reporting information, and generating feedback information according to the target sensing data, where the target sensing data is sensing data corresponding to the sensing data reporting information; and sending the feedback information to the network device.

The embodiments of this application further provide a computer-readable storage medium, configured to store a computer program. The computer-readable storage medium may be used in a computer device, and the computer program enables the computer device to perform corresponding procedures in the method for obtaining sensing data or the method for reporting sensing data in the embodiments of this application. For brevity, details are not described herein again.

The embodiments of this application further provide a computer program product. The computer program product includes a computer program or computer instructions. The computer program or the computer instructions are stored in a computer-readable storage medium. A processor of a computer device reads the computer program or the computer instructions from the computer-readable storage medium, and the processor executes the computer program or the computer instructions, to enable the computer device to perform corresponding procedures in the method for obtaining sensing data or the method for reporting sensing data in the embodiments of this application. For brevity, details are not described herein again.

The embodiments of this application not covered by the claimed invention further provide a computer program. The computer program includes a computer program or computer instructions. The computer program or the computer instructions are stored in a computer-readable storage medium. A processor of a computer device reads the computer program or the computer instructions from the computer-readable storage medium, and the processor executes the computer program or the computer instructions, to enable the computer device to perform corresponding procedures in the method for obtaining sensing data or the method for reporting sensing data in the embodiments of this application. For brevity, details are not described herein again.

It is to be understood that the processor in the embodiments of this application may be an integrated circuit chip having a signal processing capability. During implementation, the steps of the foregoing method embodiments may be completed through an integrated logic circuit of hardware or an instruction in the form of software in the processor. The foregoing processor may be a general purpose processor, a digital signal processor (DSP), an application-specific integrated circuit (ASIC), a field programmable gate array (FPGA), another programmable logic device, a discrete gate, a transistor logic device, or a discrete hardware component, may implement or execute methods, steps, and logical block diagrams disclosed in the embodiments of this application. The general-purpose processor may be a microprocessor, or the processor may be any conventional processor and the like. The steps of the methods disclosed with reference to the embodiments of this application may be directly performed and completed by using a hardware decoding processor, or may be performed and completed by using a combination of hardware and software modules in the decoding processor. The software module may be stored in a storage medium that is mature in the art, such as a RAM, a flash memory, a ROM, a programmable ROM, an electrically erasable programmable memory, or a register. The storage medium is located in the memory, and the processor reads information in the memory and completes the steps in the foregoing methods in combination with hardware of the processor.

It may be understood that, the memory in the embodiments of this application may be a volatile memory or a non-volatile memory, or may include both a volatile memory and a non-volatile memory. The non-volatile memory may be a read-only memory (ROM), a programmable ROM (PROM), an erasable PROM (EPROM), and an electronically EPROM (EEPROM), or a flash memory. The volatile memory may be a random access memory (RAM), which is used as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchronous DRAM (SLDRAM), and a direct rambus RAM (DR RAM). The memory of the systems and methods described herein is intended to include, but is not limited to, these and any other suitable types of memory.

It is to be understood that the foregoing memory is exemplary but not restrictive. For example, the memory in the embodiments of this application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a Direct Rambus RAM (DR RAM), and the like. That is, the memories in the embodiments of this application are intended to include but not limited to these and any other suitable types of memories.

Those of ordinary skill in the art may realize that the units and algorithm steps of each example described in connection with the embodiments disclosed herein can be implemented by electronic hardware, or a combination of computer software and electronic hardware. Whether these functions are performed by hardware or software depends on particular applications and design constraints of the technical solutions. A person skilled in the art may use different methods to implement the described functions for each particular application, but it is not to be considered that the implementation goes beyond the scope of this application.

Persons skilled in the art can clearly understand that for convenience and conciseness of description, for specific working processes of the foregoing described system, apparatus and unit, reference may be made to the corresponding processes in the foregoing method embodiments, and details are not described herein.

In the several embodiments provided in this application, it is to be understood that the disclosed system, apparatus, and method may be implemented in other manners. For example, the described apparatus embodiment is merely an example. For example, the unit division is merely a logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and the components displayed as units may or may not be physical units, and may be located in one place or may be distributed over a plurality of network units. Some or all of the units may be selected according to actual needs to achieve the objectives of the solutions of the embodiments.

In addition, each functional unit in each embodiment of this application may be integrated into one processing unit, or each unit may exist separately physically, or two or more units may be integrated into one unit.

In addition, each functional unit or module in each embodiment of this application may be integrated into one processing unit or module, or each unit or module may exist separately physically, or two or more units may be integrated into one unit, or two or more modules may be integrated into one module.

When the function is implemented in the form of a software functional unit and sold or used as an independent product, the integrated unit may be stored in a computer-readable storage medium. Based on such an understanding, the technical solutions of this application essentially, or the part contributing to the related technology, or some of the technical solutions may be implemented in the form of a software product. The computer software product is stored in a storage medium and includes several instructions for instructing a computer device (which may be a personal computer, a server, or the like) to perform all or some of the steps of the methods described in the embodiments of this application. The foregoing storage medium includes any medium that can store program code, such as a USB flash drive, a removable hard disk, a ROM, a RAM, a magnetic disk, or an optical disc.

The foregoing descriptions are merely a specific implementation of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for obtaining sensing data, characterized and performed by a computing device implementing a service control function, SCF, and comprising:
transmitting (101) sensing data request information to a terminal device, the sensing data request information comprising sensing data reporting information, the sensing data request information being used for indicating the terminal device to report sensing data according to the sensing data reporting information;
obtaining (102) feedback information returned by the terminal device, the feedback information being transmitted by the terminal device according to the sensing data reporting information, the feedback information comprising sensing data or sensing capability indication information, and the sensing capability indication information indicating that the terminal device does not support reporting of sensing data; and
obtaining (103) the sensing data or the sensing capability indication information according to the feedback information.

2. The method for obtaining sensing data according to claim 1, wherein the transmitting (101) sensing data request information to a terminal device comprises:
encapsulating the sensing data request information into a first data packet, the sensing data reporting information comprising at least one of a sensing data type, reporting frequency of the sensing data, a maximum reporting quantity of the sensing data, a reporting start time of sensing data, a reporting end time of the sensing data, and a reporting start and end condition of the sensing data; and
transmitting the first data packet to the terminal device.

3. The method for obtaining sensing data according to claim 2, wherein the sensing data reporting information comprises the reporting frequency of the sensing data and the maximum reporting quantity of the sensing data, and the method further comprises:
transmitting the reporting frequency of the sensing data and the maximum reporting quantity of the sensing data to a base station serving the terminal device, so that the base station allocates and schedules resources according to the reporting frequency of the sensing data and the maximum reporting quantity of the sensing data.

4. The method for obtaining sensing data according to claim 2, wherein the sensing data reporting information comprises the reporting frequency of the sensing data, and the method further comprises:
retransmitting the sensing data request information to the terminal device in a case that it is determined, according to a time at which the terminal device first returns the feedback information, that the terminal device does not return the feedback information according to the reporting frequency of the sensing data after the sensing data is obtained according to the feedback information for the first time.

5. The method for obtaining sensing data according to claim 2, wherein the sensing data reporting information comprises the sensing data type, and the sensing data type comprises at least one of location information, speed information, acceleration information, temperature information, humidity information, wind speed information, and surrounding event information of the terminal device; and the obtaining the sensing data according to the feedback information comprises:
obtaining the sensing data of the sensing data type according to the feedback information returned by the terminal device, wherein the sensing data comprises the at least one of the location information, the speed information, the acceleration information, the temperature information, the humidity information, the wind speed information, and the surrounding event information.

6. The method for obtaining sensing data according to claim 1, wherein the obtaining (102) the feedback information returned by the terminal device comprises:
obtaining an encrypted data packet returned by the terminal device; and
the obtaining the sensing data according to the feedback information comprises:
decrypting the encrypted data packet to obtain a second data packet;
decapsulating the second data packet; and
obtaining the sensing data according to the decapsulated second data packet.

7. The method for obtaining sensing data according to claim 1, wherein the method further comprises:
obtaining the sensing capability indication information transmitted by the terminal device, wherein the sensing capability indication information indicates whether the terminal device supports reporting of the sensing data; and
generating the sensing data request information and transmitting the sensing data request information to the terminal device in a case that the sensing capability indication information indicates that the terminal device supports reporting of the sensing data.

8. A method for reporting sensing data, performed by a terminal device, and comprising:
**characterized by**
obtaining (201) sensing data request information transmitted by a computing device implementing a service control function, SCF, the sensing data request information comprising sensing data reporting information;
in a case where the terminal device supports reporting of sensing data, determining (202) target sensing data according to the sensing data reporting information, and generating feedback information according to the target sensing data, the target sensing data being sensing data corresponding to the sensing data reporting information;
in a case where the terminal device does not support reporting of sensing data, generating sensing capability indication information to generate the feedback information; and
transmitting (203) the feedback information to the computing device implementing the SCF.

9. The method for reporting sensing data according to claim 8, wherein the sensing data reporting information comprises a sensing data type, and the determining (202) target sensing data according to the sensing data reporting information comprises:
determining the sensing data of the sensing data type as the target sensing data, wherein the target sensing data comprises at least one of location data, speed data, acceleration data, temperature data, humidity data, wind speed data, and surrounding event data of the terminal device.

10. The method for reporting sensing data according to claim 8, wherein the method further comprises:
determining sensing capability indication information according to sensing capability of the terminal device, wherein the sensing capability indication information indicates whether the terminal device supports reporting of the sensing data; and
transmitting the sensing capability indication information to the computing device implementing the SCF.

11. The method for reporting sensing data according to claim 10, wherein the transmitting the sensing capability indication information to the computing device implementing the SCF comprises:
performing at least one of the following operations:
transmitting the sensing capability indication information to the computing device implementing the SCF in a network registration procedure of the terminal device;
transmitting the sensing capability indication information to the computing device implementing the SCF in a location update procedure of the terminal device; and
transmitting the sensing capability indication information to the computing device implementing the SCF in a session management procedure of the terminal device.

12. A computer-readable storage medium, the computer-readable storage medium storing a computer program, the computer program being adapted to be loaded by a processor, to perform the method for obtaining sensing data according to any one of claims 1 to 7 or the method for reporting sensing data according to any one of claims 8 to 11.

13. A computer device implementing a service control function, SCF, the computer device comprising a processor and a memory, a computer program being stored in the memory, the processor being configured to execute, by invoking the computer program stored in the memory, operations in the method for obtaining sensing data according to any one of claims 1 to 7.

14. A terminal device, the computer device comprising a processor and a memory, a computer program being stored in the memory, the processor being configured to execute, by invoking the computer program stored in the memory, operations in the method for reporting sensing data according to any one of claims 8 to 11.

15. A computer program product, comprising a computer program or computer instructions, the computer program or the computer instructions, when executed by a processor, implementing operations in the method for obtaining sensing data according to any one of claims 1 to 7 or the method for reporting sensing data according to any one of claims 8 to 11.

## Patentansprüche

1. Ein Verfahren zum Erhalten von Erfassungsdaten, gekennzeichnet und ausgeführt durch ein Rechengerät, das eine Service Control Function, SCF, implementiert, und umfassend:
Senden (101) von Erfassungsdatenanforderungsinformationen an ein Endgerät, wobei die Erfassungsdatenanforderungsinformationen Erfassungsdatenmeldeinformationen umfassen, wobei die Erfassungsdatenanforderungsinformationen zum Anzeigen für das Endgerät verwendet werden, Erfassungsdaten gemäß den Erfassungsdatenmeldeinformationen zu melden;
Erhalten (102) von Rückmeldeinformationen, die von dem Endgerät zurückgegeben werden, wobei die Rückmeldeinformationen von dem Endgerät gemäß den Erfassungsdatenmeldeinformationen gesendet werden, wobei die Rückmeldeinformationen Erfassungsdaten oder Erfassungsfähigkeitsanzeigeinformationen umfassen, und die Erfassungsfähigkeitsanzeigeinformationen anzeigen, dass das Endgerät das Melden von Erfassungsdaten nicht unterstützt; und
Erhalten (103) der Erfassungsdaten oder der Erfassungsfähigkeitsanzeigeinformationen gemäß den Rückmeldeinformationen.

2. Das Verfahren zum Erhalten von Erfassungsdaten gemäß Anspruch 1, wobei das Senden (101) von Erfassungsdatenanforderungsinformationen an ein Endgerät umfasst:
Kapseln der Erfassungsdatenanforderungsinformationen in ein erstes Datenpaket, wobei die Erfassungsdatenmeldeinformationen mindestens eines von einem Erfassungsdatentyp, einer Meldefrequenz der Erfassungsdaten, einer maximalen Meldeanzahl der Erfassungsdaten, einer Meldestartzeit der Erfassungsdaten, einer Meldeendzeit der Erfassungsdaten und einer Meldestart- und -endbedingung der Erfassungsdaten umfassen; und
Senden des ersten Datenpakets an das Endgerät.

3. Das Verfahren zum Erhalten von Erfassungsdaten gemäß Anspruch 2, wobei die Erfassungsdatenmeldeinformationen die Meldefrequenz der Erfassungsdaten und die maximale Meldeanzahl der Erfassungsdaten umfassen, und das Verfahren ferner umfasst:
Senden der Meldefrequenz der Erfassungsdaten und der maximalen Meldeanzahl der Erfassungsdaten an eine Basisstation, die das Endgerät bedient, so dass die Basisstation Ressourcen gemäß der Meldefrequenz der Erfassungsdaten und der maximalen Meldeanzahl der Erfassungsdaten zuweist und plant.

4. Das Verfahren zum Erhalten von Erfassungsdaten gemäß Anspruch 2, wobei die Erfassungsdatenmeldeinformationen die Meldefrequenz der Erfassungsdaten umfassen, und das Verfahren ferner umfasst:
Erneutes Senden der Erfassungsdatenanforderungsinformationen an das Endgerät in einem Fall, dass gemäß einer Zeit, zu der das Endgerät die Rückmeldeinformationen erstmals zurückgibt, bestimmt wird, dass das Endgerät die Rückmeldeinformationen nicht gemäß der Meldefrequenz der Erfassungsdaten zurückgibt, nachdem die Erfassungsdaten gemäß den Rückmeldeinformationen zum ersten Mal erhalten werden.

5. Das Verfahren zum Erhalten von Erfassungsdaten gemäß Anspruch 2, wobei die Erfassungsdatenmeldeinformationen den Erfassungsdatentyp umfassen, und der Erfassungsdatentyp mindestens eines von Standortinformationen, Geschwindigkeitsinformationen, Beschleunigungsinformationen, Temperaturinformationen, Feuchtigkeitsinformationen, Windgeschwindigkeitsinformationen und Umgebungsereignisinformationen des Endgeräts umfasst; und das Erhalten der Erfassungsdaten gemäß den Rückmeldeinformationen umfasst:
Erhalten der Erfassungsdaten des Erfassungsdatentyps gemäß den von dem Endgerät zurückgegebenen Rückmeldeinformationen, wobei die Erfassungsdaten das mindestens eine von den Standortinformationen, den Geschwindigkeitsinformationen, den Beschleunigungsinformationen, den Temperaturinformationen, den Feuchtigkeitsinformationen, den Windgeschwindigkeitsinformationen und den Umgebungsereignisinformationen umfassen.

6. Das Verfahren zum Erhalten von Erfassungsdaten gemäß Anspruch 1, wobei das Erhalten (102) der von dem Endgerät zurückgegebenen Rückmeldeinformationen umfasst:
Erhalten eines verschlüsselten Datenpakets, das von dem Endgerät zurückgegeben wird; und
wobei das Erhalten der Erfassungsdaten gemäß den Rückmeldeinformationen umfasst:
Entschlüsseln des verschlüsselten Datenpakets, um ein zweites Datenpaket zu erhalten;
Entkapseln des zweiten Datenpakets; und
Erhalten der Erfassungsdaten gemäß dem entkapselten zweiten Datenpaket.

7. Das Verfahren zum Erhalten von Erfassungsdaten gemäß Anspruch 1, wobei das Verfahren ferner umfasst:
Erhalten der von dem Endgerät gesendeten Erfassungsfähigkeitsanzeigeinformationen, wobei die Erfassungsfähigkeitsanzeigeinformationen anzeigen, ob das Endgerät das Melden der Erfassungsdaten unterstützt; und
Generieren der Erfassungsdatenanforderungsinformationen und Senden der Erfassungsdatenanforderungsinformationen an das Endgerät in einem Fall, dass die Erfassungsfähigkeitsanzeigeinformationen anzeigen, dass das Endgerät das Melden der Erfassungsdaten unterstützt.

8. Ein Verfahren zum Melden von Erfassungsdaten, ausgeführt durch ein Endgerät, und umfassend:
**gekennzeichnet durch**
Erhalten (201) von Erfassungsdatenanforderungsinformationen, die von einem Rechengerät gesendet werden, das eine Service Control Function, SCF, implementiert, wobei die Erfassungsdatenanforderungsinformationen Erfassungsdatenmeldeinformationen umfassen;
in einem Fall, in dem das Endgerät das Melden von Erfassungsdaten unterstützt, Bestimmen (202) von Zielerfassungsdaten gemäß den Erfassungsdatenmeldeinformationen, und Generieren von Rückmeldeinformationen gemäß den Zielerfassungsdaten, wobei die Zielerfassungsdaten Erfassungsdaten sind, die den Erfassungsdatenmeldeinformationen entsprechen;
in einem Fall, in dem das Endgerät das Melden von Erfassungsdaten nicht unterstützt, Generieren von Erfassungsfähigkeitsanzeigeinformationen, um die Rückmeldeinformationen zu generieren; und
Senden (203) der Rückmeldeinformationen an das Rechengerät, das die SCF implementiert.

9. Das Verfahren zum Melden von Erfassungsdaten gemäß Anspruch 8, wobei die Erfassungsdatenmeldeinformationen einen Erfassungsdatentyp umfassen, und das Bestimmen (202) von Zielerfassungsdaten gemäß den Erfassungsdatenmeldeinformationen umfasst:
Bestimmen der Erfassungsdaten des Erfassungsdatentyps als die Zielerfassungsdaten, wobei die Zielerfassungsdaten mindestens eines von Standortdaten, Geschwindigkeitsdaten, Beschleunigungsdaten, Temperaturdaten, Feuchtigkeitsdaten, Windgeschwindigkeitsdaten und Umgebungsereignisdaten des Endgeräts umfassen.

10. Das Verfahren zum Melden von Erfassungsdaten gemäß Anspruch 8, wobei das Verfahren ferner umfasst:
Bestimmen von Erfassungsfähigkeitsanzeigeinformationen gemäß Erfassungsfähigkeit des Endgeräts, wobei die Erfassungsfähigkeitsanzeigeinformationen anzeigen, ob das Endgerät das Melden der Erfassungsdaten unterstützt; und
Senden der Erfassungsfähigkeitsanzeigeinformationen an das Rechengerät, das die SCF implementiert.

11. Das Verfahren zum Melden von Erfassungsdaten gemäß Anspruch 10, wobei das Senden der Erfassungsfähigkeitsanzeigeinformationen an das Rechengerät, das die SCF implementiert, umfasst:
Ausführen mindestens einer der folgenden Operationen:
Senden der Erfassungsfähigkeitsanzeigeinformationen an das Rechengerät, das die SCF implementiert, in einem Netzregistrierungsverfahren des Endgeräts;
Senden der Erfassungsfähigkeitsanzeigeinformationen an das Rechengerät, das die SCF implementiert, in einem Standortaktualisierungsverfahren des Endgeräts; und
Senden der Erfassungsfähigkeitsanzeigeinformationen an das Rechengerät, das die SCF implementiert, in einem Sitzungsverwaltungsverfahren des Endgeräts.

12. Ein computerlesbares Speichermedium, wobei das computerlesbare Speichermedium ein Computerprogramm speichert, wobei das Computerprogramm dazu geeignet ist, von einem Prozessor geladen zu werden, um das Verfahren zum Erhalten von Erfassungsdaten gemäß einem beliebigen der Ansprüche 1 bis 7 oder das Verfahren zum Melden von Erfassungsdaten gemäß einem beliebigen der Ansprüche 8 bis 11 auszuführen.

13. Ein Computergerät, das eine Service Control Function, SCF, implementiert, wobei das Computergerät einen Prozessor und einen Speicher umfasst, wobei ein Computerprogramm in dem Speicher gespeichert ist, wobei der Prozessor dazu konfiguriert ist, durch Aufrufen des in dem Speicher gespeicherten Computerprogramms Operationen in dem Verfahren zum Erhalten von Erfassungsdaten gemäß einem beliebigen der Ansprüche 1 bis 7 auszuführen.

14. Ein Endgerät, wobei das Computergerät einen Prozessor und einen Speicher umfasst, wobei ein Computerprogramm in dem Speicher gespeichert ist, wobei der Prozessor dazu konfiguriert ist, durch Aufrufen des in dem Speicher gespeicherten Computerprogramms Operationen in dem Verfahren zum Melden von Erfassungsdaten gemäß einem beliebigen der Ansprüche 8 bis 11 auszuführen.

15. Ein Computerprogrammprodukt, umfassend ein Computerprogramm oder Computeranweisungen, wobei das Computerprogramm oder die Computeranweisungen, wenn von einem Prozessor ausgeführt, Operationen in dem Verfahren zum Erhalten von Erfassungsdaten gemäß einem beliebigen der Ansprüche 1 bis 7 oder in dem Verfahren zum Melden von Erfassungsdaten gemäß einem beliebigen der Ansprüche 8 bis 11 implementieren.

## Revendications

1. Procédé d'obtention de données de détection, caractérisé et exécuté par un dispositif informatique mettant en œuvre une fonction de commande de service, SCF, et comprenant:
la transmission (101) des informations de demande de données de détection à un dispositif terminal, les informations de demande de données de détection comprenant des informations de communication de données de détection, les informations de demande de données de détection étant utilisées pour indiquer au dispositif terminal de communiquer les données de détection conformément aux informations de communication de données de détection;
l'obtention (102) des informations de retour renvoyées par le dispositif terminal, les informations de retour étant transmises par le dispositif terminal conformément aux informations de communication de données de détection, les informations de retour comprenant des données de détection ou des informations d'indication de capacité de détection, et les informations d'indication de capacité de détection indiquant que le dispositif terminal ne prend pas en charge la communication de données de détection; et
l'obtention (103) des données de détection ou des informations d'indication de capacité de détection conformément aux informations de rétroaction.

2. Procédé d'obtention de données de détection selon la revendication 1, dans lequel la transmission (101) d'informations de demande de données de détection à un dispositif terminal, comprend:
l'encapsulation des informations de demande de données de détection dans un premier paquet de données, les informations de communication de données de détection comprenant au moins l'un parmi un type de données de détection, une fréquence de communication des données de détection, une quantité maximale de communication des données de détection, une heure de début de communication de données de détection, une heure de fin de communication de données de détection et une condition de début et de fin de rapport des données de détection; et
la transmission du premier paquet de données au dispositif terminal.

3. Procédé d'obtention de données de détection selon la revendication 2, dans lequel les informations de communication de données de détection comprennent la fréquence de communication des données de détection et la quantité maximale de communication des données de détection, et le procédé comprend en outre:
la transmission de la fréquence de communication des données de détection et la quantité maximale de communication des données de détection à une station de base desservant le dispositif terminal, de sorte que la station de base attribue et planifie les ressources en fonction de la fréquence de communication des données de détection et de la quantité maximale de communication des données de détection.

4. Procédé d'obtention de données de détection selon la revendication 2, dans lequel les informations de communication de données de détection comprennent la fréquence de communication des données de détection, et le procédé comprend en outre:
retransmettre les informations de demande de données de détection au dispositif terminal dans le cas où il serait déterminé, en fonction d'un moment auquel le dispositif terminal renvoie pour la première fois les informations de retour, que le dispositif terminal ne renvoie pas les informations de retour conformément à la fréquence de rapport des données de détection après que les données de détection ont été obtenues pour la première fois conformément aux informations de retour.

5. Procédé d'obtention de données de détection selon la revendication 2, dans lequel les informations de communication de données de détection comprennent le type de données de détection, et le type de données de détection comprend au moins les unes parmi les informations d'emplacement, les informations de vitesse, les informations d'accélération, les informations de température, les informations d'humidité, les informations de vitesse du vent et les informations d'événements environnants du dispositif terminal; et l'obtention des données de détection en fonction des informations de retour consiste à:
obtenir des données de détection du type de données de détection conformément aux informations de retour renvoyées par le dispositif terminal, les données de détection comprenant au moins les unes parmi les informations d'emplacement, les informations de vitesse, les informations d'accélération, les informations de température, les informations d'humidité, les informations de vitesse du vent et les informations sur les événements environnants.

6. Procédé d'obtention de données de détection selon la revendication 1, dans lequel l'obtention (102) des informations de retour renvoyées par le dispositif terminal consiste à:
obtenir un paquet de données chiffrées retourné par le dispositif terminal; et
l'obtention des données de détection conformément aux informations de retour consiste à:
déchiffrer le paquet de données chiffrées pour obtenir un deuxième paquet de données;
décapsuler le deuxième paquet de données; et
obtenir les données de détection conformément au deuxième paquet de données décapsulé.

7. Procédé d'obtention de données de détection selon la revendication 1, le procédé comprenant en outre:
l'obtention des informations d'indication de capacité de détection transmises par le dispositif terminal, les informations d'indication de capacité de détection indiquant si le dispositif terminal prend en charge la communication des données de détection; et
la génération des informations de demande de données de détection et la transmission des informations de demande de données de détection au dispositif terminal dans le cas où les informations d'indication de capacité de détection indiqueraient que le dispositif terminal prend en charge la communication des données de détection.

8. Procédé de communication de données de détection, exécuté par un dispositif terminal, et comprenant:
**caractérisé par**
l'obtention (201) des informations de demande de données de détection transmises par un dispositif informatique mettant en œuvre une fonction de commande de service, SCF, les informations de demande de données de détection comprenant des informations de communication de données de détection;
dans le cas où le dispositif terminal prend en charge la communication des données de détection, la détermination (202) des données de détection cibles en fonction des informations de communication des données de détection, et la génération d'informations de retour en fonction des données de détection cibles, les données de détection cibles étant les données de détection correspondant aux informations de communication des données de détection;
dans le cas où le dispositif terminal ne prendrait pas en charge la transmission des données de détection, la génération d'informations d'indication de capacité de détection afin de générer les informations de retour; et
la transmission (203) des informations de retour au dispositif informatique mettant en œuvre la SCF.

9. Procédé de communication de données de détection selon la revendication 8, dans lequel les informations de communication de données de détection comprennent un type de données de détection, et la détermination (202) des données de détection cibles en fonction des informations de communication de données de détection consiste à:
déterminer les données de détection du type de données de détection comme données de détection cibles, les données de détection cibles comprenant au moins les unes parmi les données d'emplacement, les données de vitesse, les données d'accélération, les données de température, les données d'humidité, les données de vitesse du vent et les données d'événements environnants du dispositif terminal.

10. Procédé de communication de données de détection selon la revendication 8, dans lequel le procédé comprenant en outre:
la détermination des informations d'indication de capacité de détection en fonction de la capacité de détection du dispositif terminal, dans lequel les informations d'indication de capacité de détection indiquant si le dispositif terminal prend en charge la communication des données de détection; et
la transmission des informations d'indication de capacité de détection à la SCF.

11. Procédé de communication de données de détection selon la revendication 10, dans lequel la transmission des informations d'indication de capacité de détection au dispositif informatique mettant en œuvre le SCF consiste à:
réaliser au moins l'une des opérations suivantes:
la transmission des informations d'indication de capacité de détection au dispositif informatique mettant en œuvre la SCF lors d'une procédure d'enregistrement de réseau du dispositif terminal;
la transmission des informations d'indication de capacité de détection à la SCF lors d'une procédure de mise à jour d'emplacement du dispositif terminal; et
la transmission des informations d'indication de capacité de détection au dispositif informatique mettant en œuvre la SCF lors d'une procédure de gestion de session du dispositif terminal.

12. Support d'enregistrement lisible par ordinateur, le support d'enregistrement lisible par ordinateur stockant un programme informatique, le programme informatique étant adapté pour être chargé par un processeur, pour mettre en œuvre le procédé d'obtention de données de détection selon l'une quelconque des revendications 1 à 7, ou le procédé de communication de données de détection selon l'une quelconque des revendications 8 à 11.

13. Dispositif terminal mettant en œuvre une fonction de commande de service, SCF, le dispositif informatique comprenant un processeur et une mémoire, un programme informatique étant stocké dans la mémoire, le processeur étant configuré pour réaliser, en appelant le programme informatique stocké dans la mémoire, des opérations du procédé d'obtention de données de détection selon l'une quelconque des revendications 1 à 7.

14. Dispositif terminal, le dispositif informatique comprenant un processeur et une mémoire, un programme informatique étant stocké dans la mémoire, le processeur étant configuré pour réaliser, en appelant le programme informatique stocké dans la mémoire, des opérations du procédé de communication de données de détection selon l'une quelconque des revendications 8 à 11.

15. Produit programme informatique, comprenant un programme informatique ou des instructions informatiques, le programme informatique ou les instructions informatiques, lorsqu'il/elles est/sont exécuté(es) par un processeur, mettant en œuvre les opérations du procédé d'obtention de données de détection selon l'une quelconque des revendications 1 à 7, ou le procédé de communication de données de détection selon l'une quelconque des revendications 8 à 11.
